# EUROPEAN PATENT SPECIFICATION

(11) **EP 2 388 530 B1**
(45) Date of publication and mention of the grant of the patent: **08.03.2017**
(21) Application number: 11158612.9
(22) Date of filing: 17.03.2011
(51) Int. Cl.: F24D 3/18, F24D 17/02, F24D 19/10

(54) **Hot water supply device with a heat pump**
Heißwasserversorgungsvorrichtung mit einer Wärmepumpe
Dispositif d'alimentation en eau chaude avec une pompe à chaleur

(30) Priority: 20.05.2010 KR 20100047301
(43) Date of publication of application: 23.11.2011
(73) Proprietor: LG Electronics Inc., Seoul 150-721 (KR)
(72) Inventor: Sim, Jieseop, Gyeongnam 641-711 (KR)
(74) Representative: Vossius & Partner Patentanwälte Rechtsanwälte mbB

(56) References cited:
- JP-A- 2004 257 586
- JP-A- 2005 147 409
- KR-A- 20070 088 034
- KR-A- 20100 046 365

## Description

### BACKGROUND OF THE INVENTION

### 1. Field of the Invention

The present invention relates to a hot water supply device associated with a heat pump to supply hot water.

### 2. Description of the Related Art

In general, a hot water supply device uses a heating source to heat water and supply the heated water to a user. In this case, a device using a heat pump to heat water and supply the heated water to a user can be referred to as a hot water supply device associated with a heat pump.

The hot water supply device associated with the heat pump includes a water supply passage for supplying water, a water storage part for storing the water supplied through the water supply passage, a heating source for heating the supplied water, and a water discharge passage for supplying the heated water to a user.

The heat pump includes a compressor compressing a refrigerant, a condenser in which the refrigerant discharged from the compressor is condensed, an expander in which the refrigerant passing through the condenser is expanded, an evaporator in which the refrigerant expanded through the expander is evaporated, and a refrigerant pipe connecting the compressor, the condenser, the expander, and the evaporator to form a refrigerant cycle.

While the refrigerant flows in the heat pump, the refrigerant absorbs heat in the evaporator and emits heat in the condenser. The refrigerant transmits heat to the water in the hot water supply device, so that the hot water supply device can perform a hot water supply operation.

JP 2005 147409 A relates to a heat pump type air-conditioning and heating equipment to operate the hot water heating device, such as a radiator or floor heating panel.

KR 2010 0046365 A relates to a heat pump system provided to simultaneously supply hot water and cold air in the summer time, and to simultaneously supply hot water and hot air in the winter time.

### SUMMARY OF THE INVENTION

The present invention provides a hot water supply device associated with a heat pump, in which hot water supply performance and heating performance are optimized according to a hot water supply load and a cooling/heating load. The hot water supply device associated with a heat pump is defined in claim 1 and includes:
a main refrigerant circuit including a compressor, an indoor heat exchanger, an expander, and an outdoor heat exchanger to form a refrigerant cycle; and a hot water supply heat exchanger connected to the main refrigerant circuit to perform hot water supply using a high-temperature refrigerant discharged from the compressor, wherein the hot water supply heat exchanger is used as a primary condenser in which the discharge side refrigerant of the compressor is primarily condensed, and one of the indoor heat exchanger and the outdoor heat exchanger is used as a secondary condenser in which the discharge side refrigerant of the compressor is secondarily condensed, wherein, when the hot water supply and cooling/heating operations are performed at the same time, an amount of a hot water supply side refrigerant flowing into the hot water supply heat exchanger and an amount of a cooling/heating side refrigerant bypassing the hot water supply heat exchanger to directly flow into the indoor heat exchanger or the outdoor heat exchanger are adjusted according to a hot water supply load and a cooling/heating load. Therefore, according to the present invention, the hot water supply performance and the heating performance may be optimized according to the hot water supply load and the cooling/heating load.

### BRIEF DESCRIPTION OF THE DRAWINGS

Fig. 1 is a schematic view of a hot water supply device associated with a heat pump according to a first embodiment.
Fig. 2 is a control block diagram of the hot water supply device associated with the heat pump according to the first embodiment.
Fig. 3 is a flowchart illustrating a control flow in case where a hot water supply device associated with a heat pump is operated in hot water supply and heating modes at the same time according to an embodiment.
Fig. 4 is a flowchart illustrating a control flow in case where a hot water supply device associated with a heat pump is operated in a hot water supply priority mode according to an embodiment.
Fig. 5 is a schematic view of a hot water supply device associated with a heat pump according to a second embodiment.
Fig. 6 is a schematic view of a hot water supply device associated with a heat pump according to a third embodiment.
Fig. 7 is a schematic view of a hot water supply device associated with a heat pump according to a fourth embodiment.
Fig. 8 is a schematic view of a hot water supply device associated with a heat pump according to a fifth embodiment.
Fig. 9 is a flowchart illustrating a control flow in which a hot water discharge side refrigerant is introduced or bypassed into an indoor heat exchanger according to an amount of a hot water supply side refrigerant and an amount of heating/cooling side refrigerant of the hot water supply device associated with the heat pump according to the fifth embodiment.
Fig. 10 is a schematic view of a hot water supply device associated with a heat pump according to a sixth embodiment.
Fig. 11 is a schematic view of a hot water supply device associated with a heat pump according to a seventh embodiment.

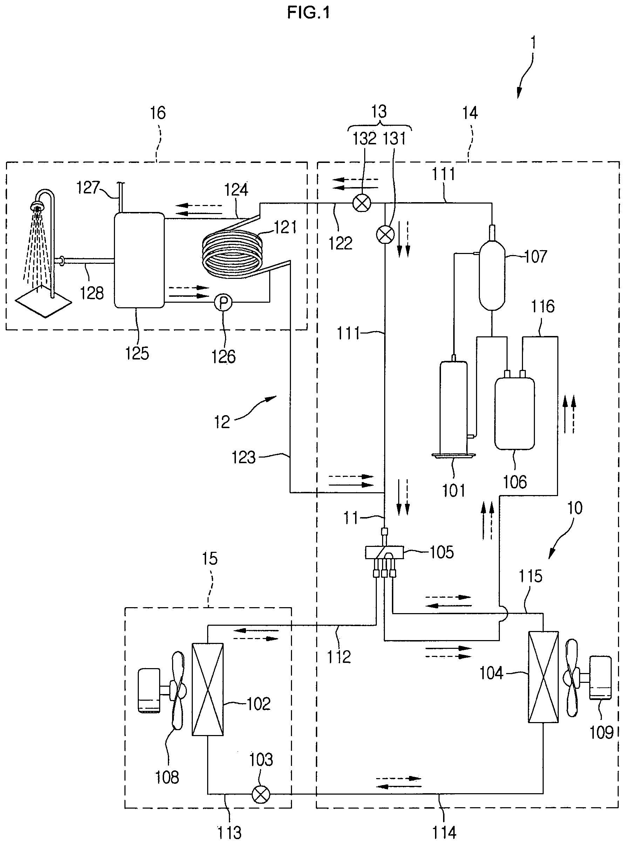

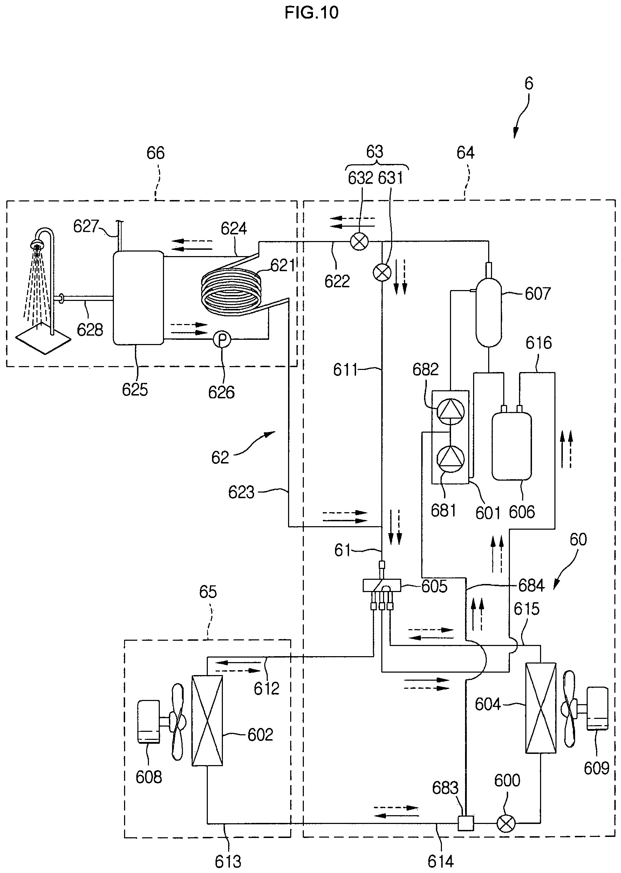

The embodiments of fig. 1 and 10 do not fall under the claimed invention but are used to explain its features.

### DETAILED DESCRIPTION OF THE EMBODIMENTS

Reference will now be made in detail to the embodiments of the present disclosure, examples of which are illustrated in the accompanying drawings.

In the following detailed description of the preferred embodiments, reference is made to the accompanying drawings that form a part hereof, and in which is shown by way of illustration specific preferred embodiments in which the invention may be practiced. These embodiments are described in sufficient detail to enable those skilled in the art to practice the invention, and it is understood that other embodiments may be utilized and that logical structural, mechanical, electrical, and chemical changes may be made without departing from the scope of the invention. Although the embodiments of fig. 1 and 10 do not fall under the invention, they are used for explaining the some of the features of the invention.

To avoid detail not necessary to enable those skilled in the art to practice the invention, the description may omit certain information known to those skilled in the art. The following detailed description is, therefore, not to be taken in a limiting sense, and the scope of the present invention is defined only by the appended claims.

Fig. 1 is a schematic view of a hot water supply device associated with a heat pump according to a first embodiment.

Referring to Fig. 1, a hot water supply device 1 associated with a heat pump includes a main refrigerant circuit 10, which includes a compressor 101, an indoor heat exchanger 102, an expander 103, and an outdoor heat exchanger 104 to form a refrigerant cycle and a hot water supply heat exchanger 121 in which a hot water supply operation is performed using a high-temperature refrigerant discharged from the compressor 101.

The main refrigerant circuit 10 further includes a cooling/heating switch part 105 selectively switching a flow direction of the refrigerant discharged from the compressor 101 to allow the refrigerant to flow toward one of the indoor heat exchanger 102 and the outdoor heat exchanger 104 and a main refrigerant pipe 11 connecting the compressor 101, the cooling/heating switch part 105, the indoor heat exchanger 102, the expander 103, and the outdoor heat exchanger 104 to each other.

Here, the flow direction of the refrigerant may be switched by the cooling/heating switch part 105 to perform one of an indoor air-conditioning for cooling and an indoor air-conditioning for heating. That is, an air-conditioning operation performed by the main refrigerant circuit 10 may be performed through a heating operation for heating indoor air or a cooling operation for cooling the indoor air.

Also, the main refrigerant pipe 11 includes a compressor discharge side pipe 111 in which the refrigerant discharged from the compressor 101 flows, an indoor heat exchanger connection pipe 112 connecting the cooling/heating switch part 105 to the indoor heat exchanger 102, an indoor heat exchanger-expander connection pipe 113 connecting the indoor heat exchanger 102 to the expander 103, an outdoor heat exchanger-expander connection pipe 114 connecting the outdoor heat exchanger 104 to the expander 103, an outdoor heat exchanger connection pipe 115 connecting the outdoor heat exchanger 104 to the cooling/heating switch part 105, and a compressor inflow side pipe 116 in which the refrigerant passing through the cooling/heating switch part 105 is introduced toward the compressor 101.

In more detail, when the hot water supply device 1 associated with the heat pump performs the heating operation, the compressor discharge side pipe 111 communicates with the indoor heat exchanger connection pipe 112 and the outdoor heat exchanger connection pipe 115 communicates with the compressor inflow side pipe 116 by the cooling/heating switch part 105. The refrigerant discharged from the compressor 101 sequentially passes through the indoor heat exchanger 102, the expander 103, and the outdoor heat exchanger 104, and then is introduced again into the compressor 101. Thus, the indoor heat exchanger may serve as a condenser. That is, since the refrigerant is condensed in the indoor heat exchanger 102 to heat the indoor air, the indoor heating may be performed.

Also, when the hot water supply device 1 associated with the heat pump performs the cooling operation, the compressor discharge side pipe 111 communicates with the outdoor heat exchanger connection pipe 115 and the indoor heat exchanger connection pipe 112 communicates with the compressor inflow side pipe 116 by the cooling/heating switch part 105. The refrigerant discharged from the compressor 101 sequentially passes through the outdoor heat exchanger 104, the expander 103, and the indoor heat exchanger 102, and then is introduced into the compressor 101. Thus, the indoor heat exchanger 102 may serve as an evaporator. That is, since the refrigerant is evaporated in the indoor heat exchanger 102 to cool the indoor air, the indoor cooling may be performed.

An accumulator for preventing a liquid refrigerant from being introduced into the compressor 101 is installed on the compressor inflow side pipe 116. Also, an oil separator 107 for separating oil contained in the refrigerant discharged from the compressor 101 to recover the oil into an inflow side of the compressor 101 is installed on the compressor discharge side pipe 111.

The indoor heat exchanger 102 performs the indoor cooling or heating by exchanging heat between the indoor air and the refrigerant. An indoor fan 108 is installed at a side of a circumference of the indoor heat exchanger 102 to circulate the indoor air into the indoor heat exchanger 102.

Also, in the outdoor heat exchanger 104, the refrigerant is heat-exchanged, and thus is condensed or evaporated. The outdoor heat exchanger 104 may include an air cooling type heat exchanger in which ourdoor air and the refrigerant are heat-exchanged with each other or a water cooling type heat exchanger in which cooling water and the refrigerant are heat-exchanged with each other. Hereinafter, the outdoor heat exchanger including the air cooling type heat exchanger will be described as an example. In this case, an outdoor fan 109 for blowing the outdoor air into the outdoor heat exchanger 104 may be installed at a side of a circumference of the outdoor heat exchanger 104.

The expander 103 is disposed between the indoor heat exchanger 102 and the outdoor heat exchanger 104 in the refrigerant cycle. The expander 103 may expand the condensed refrigerant in the indoor heat exchanger 102 or the outdoor heat exchanger 104.

A hot water supply passage 12 for bypassing the refrigerant flowing into the main refrigerant circuit 10 into the hot water supply heat exchanger 121 is connected to the main refrigerant circuit 10. The hot water supply passage 12 includes a hot water inflow side pipe 122 guiding the refrigerant of the main refrigerant circuit 10, particularly, the refrigerant discharged from the compressor 101 and a hot water discharge side pipe 123 guiding the refrigerant passing through the hot water supply heat exchanger 121 into the main refrigerant circuit 10, particularly, the cooling/heating switch part 105. The hot water inflow side pipe 122 and the hot water discharge side pipe 123 are connected to the main refrigerant pipe 11 corresponding between the compressor 101 and the cooling/heating switch part 105 in the refrigerant cycle, respectively.

In more detail, the hot water inflow side pipe 122 has one end connected to the compressor discharge side pipe 111 and the other end connected to the hot water supply heat exchanger 121. Also, the hot water discharge side pipe 123 has one end connected to the hot water supply heat exchanger 121 and the other end connected to the compressor discharge side pipe 111.

The hot water supply heat exchanger 121 includes a refrigerant passage through which an overheated refrigerant passes and a water passage through which water used for the hot water supply passes. The hot water supply heat exchanger 121 may include a double pipe type heat exchanger in which two pipes having coaxial radii different from each other form the refrigerant passage and the water passage. Also, the hot water supply heat exchanger 121 may include a plate type heat exchanger in which the refrigerant passage and the water passage are alternately disposed with a heat transfer member therebetween.

The hot water supply heat exchanger 121 is connected to a hot water supply tank 125 by the hot water supply pipe 124. The hot water supply pipe 124 guides the water to circulate the water between the hot water supply heat exchanger 121 and the hot water supply tank 125. A pump 126 for forcedly circulating the water within the hot water supply pipe 124 is installed on the hot water supply pipe 124. Also, the hot water supply tank 125 stores the water to be supplied to a user. A water supply passage 127 through water is supplied from the outside to the hot water supply tank 125 and a water discharge passage 128 for discharging the water within the hot water supply tank 125 to supply the water to the user are connected to the hot water supply tank 125.

Here, the hot water supply tank 125 may be configured to directly supply the water introduced into the hot water supply tank 125 to the user through the water discharge passage 128 after the water is heated in the hot water supply heat exchanger 121. Also, a hot water supply coil connected to the hot water supply pipe 124 is installed inside the hot water supply tank 125. The water heated in the hot water supply heat exchanger 121 heats the water within the hot water supply tank 125 while passing through the hot water supply coil. Also, the water supplied into the water supply passage 127 may be heated by the hot water supply coil, and then may be supplied to the user through the water discharge passage 128.

The hot water supply device 1 associated with the heat pump further includes a flowrate adjustment part 13 for adjusting an amount of the refrigerant introduced into the hot water supply heat exchanger 121 and an amount of the refrigerant bypassing the hot water supply heat exchanger 121. The flowrate adjustment part 13 may adjust an amount of the refrigerant discharged from the compressor 101 and flowing along the main refrigerant circuit 10 and an amount of the refrigerant bypassing the hot water supply heat exchanger 121.

The flowrate adjustment part 13 includes a cooling/heating side flowrate adjustment part 131 installed on the compressor discharge side pipe 111 and a hot water supply side flowrate adjustment part 132 installed on the hot water inflow side pipe 122. The cooling/heating side flowrate adjustment part 131 is installed on the main refrigerant pipe 11 correpsonding between both ends of the hot water supply passage 12 in the refrigerant cycle.

Here, the cooling/heating side flowrate adjustment part 131 and the hot water supply side flowrate adjustment part 132 may be linearly adjusted in open degree. Thus, an amount of the refrigerant introduced into the hot water supply heat exchanger 121, i.e., the hot water supply side and an amount of the refrigerant bypassing the hot water supply heat exchanger 121 and introduced into the main refrigerant circuit 10, i.e., the cooling/heating side may be linearly varied according to a ratio between an open degree of the cooling/heating side flowrate adjustment part 131 and an open degree of the hot water supply side flowrate adjustment part 132.

For example, when a hot water supply load is greater than a cooling/heating load, at least one of a decrease of the open degree of the cooling/heating side flowrate adjustment part 131 or an increase of the open degree of the hot water supply side flowrate adjustment part may be performed. Thus, an amount of the refrigerant introduced into the hot water supply side may be relatively increased. Also, when the cooling/heating load is greater than the hot water supply load, since at least one of a decrease of the open degree of the hot water supply side flowrate adjustment part 132 and an increase of the open degree of the cooling/heating side flowrate adjustment part 131 is performed, an amount of the refrigerant introduced into the cooling/heating side may be relatively increased.

Of course, the cooling/heating side flowrate adjustment part 131 may be completely closed or the hot water supply side flowrate adjustment part 132 may be completely closed to allow the discharge side refrigerant of the compressor 101 to be completely introduced into the hot water supply heat exchanger 121 or to bypass the hot water supply heat exchanger 121, thereby being directly introduced into the cooling/heating side.

Hereinafter, a refrigerant flow of the hot water supply device 1 associated with the heat pump according to an embodiment will be described in detail with reference to the accompanying drawing.

First, referring to Fig. 1, a refrigerant flow in case where the hot water supply device 1 associated with the heat pump performs the heating operation will be described. The refrigerant discharged from the compressor 101 sequentially passes through the cooling/heating switch part 105, the indoor heat exchanger 102, the expander 103, and the outdoor heat exchanger 104, and then is introduced again into the compressor 101 through the cooling/heating switch part 105. Here, since the refrigerant heats the indoor air while being condensed in the indoor heat exchanger 102, the indoor heating is performed.

When the hot water supply device 1 associated with the heat pump performs the cooling operation, the refrigerant discharged from the compressor 101 sequentially passes through the cooling/heating switch part 105, the outdoor heat exchanger 104, the expander 103, and the indoor heat exchanger 102, and then is introduced again into the compressor 101 through the cooling/heating switch part 105. Here, since the refrigerant cools the indoor air while being evaporated in the indoor heat exchanger 102, the indoor cooling is performed.

Also, when the hot water supply device 1 associated with the heat pump performs a defrosting operation, a reverse cycle refrigerant flow is performed in the main refrigerant circuit 10, and the hot water supply is continuously performed. In more detail, the refrigerant flow during the defrosting operation corresponds to a reverse cycle with respect to the refrigerant flow during the heating operation of the the hot water supply device 1 associated with the heat pump. That is, the refrigerant flow when the hot water supply device 1 associated with the heat pump performs the defrosting operation is equal to that when the hot water supply device 1 associated with the heat pump performs the cooling operation.

Regardless of the refrigerant flow direction in the main refrigerant circuit 10, at least portion of the refrigerant discharged from the compressor 101 may be introduced into the hot water supply heat exchanger 121. That is, regardless of the cooling operation or defrosting operation switch of the the hot water supply device 1 associated with the heat pump, the hot water supply may be continuously performed.

A portion of the refrigerant discharged from the compressor 101 during the heating operation or cooling operation may be introduced into the hot water supply heat exchanger 121 to perform the hot water supply and the heating operation at the same time or the hot water supply and the coolig operation at the same time. Also, the open degrees of the cooling/heating side flowrate adjustment part 131 and the hot water supply side flowrate adjustment part 132 may be adjusted to vary an amount of the refrigerant introduced into the hot water supply heat exchanger 121 and an amount of the refrigerant introduced into the cooling/heating switch part 105 without passing through the hot water supply heat exchanger 121. That is, during the simultaneous hot water supply and heating operation or during the simultaneous hot water supply and cooling operation, hot water supply performance, heating performance, and cooling performance may be varied.

Here, when at least portion of the cooling/heating side flowrate adjustment part is opened, the hot water supply heat exchanger 121 may serve as a kind of a desuperheater in which the high-temperature overheated refrigerant discharged from the compressor 101 is heat-exchanged with the water for the hot water supply and is condensed to perform the hot water supply.

The hot water supply device 1 associated with the heat pump includes an outdoor unit 14 and an indoor unit 15, which are dispsoed in an outdoor space and an indoor space and a hot water supply unit 16 provided for the hot water supply.

The compressor 101, the cooling/heating switch part 105, the outdoor heat exchanger 104, and the outdoor fan 109 are installed in the outdoor unit 14. Also, the expander 103, the indoor heat exchanger 102, and the indoor fan 108 are installed in the indoor unit 15. The hot water supply heat exchanger 121, the hot water supply pump 126, and the hot water supply tank 125 are installed in the hot water supply unit 16. Also, the cooling/heating flowrate adjustment part 131 and the hot water supply side flowrate adjustment part 132 may be installed in the outdoor unit 14.

A control flow of the hot water supply device associated with heat pump according to an embodiment will be described in detail with reference to the accompanying draings.

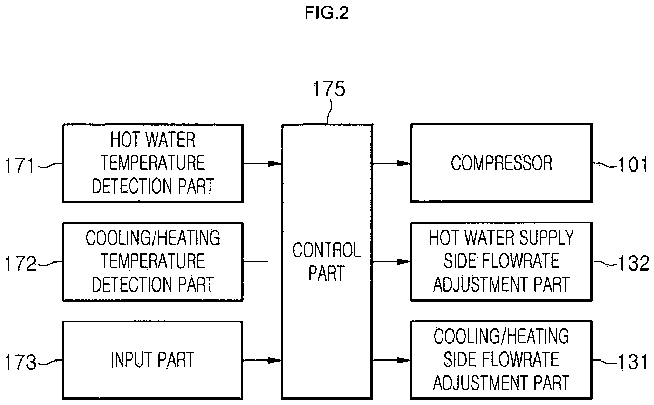

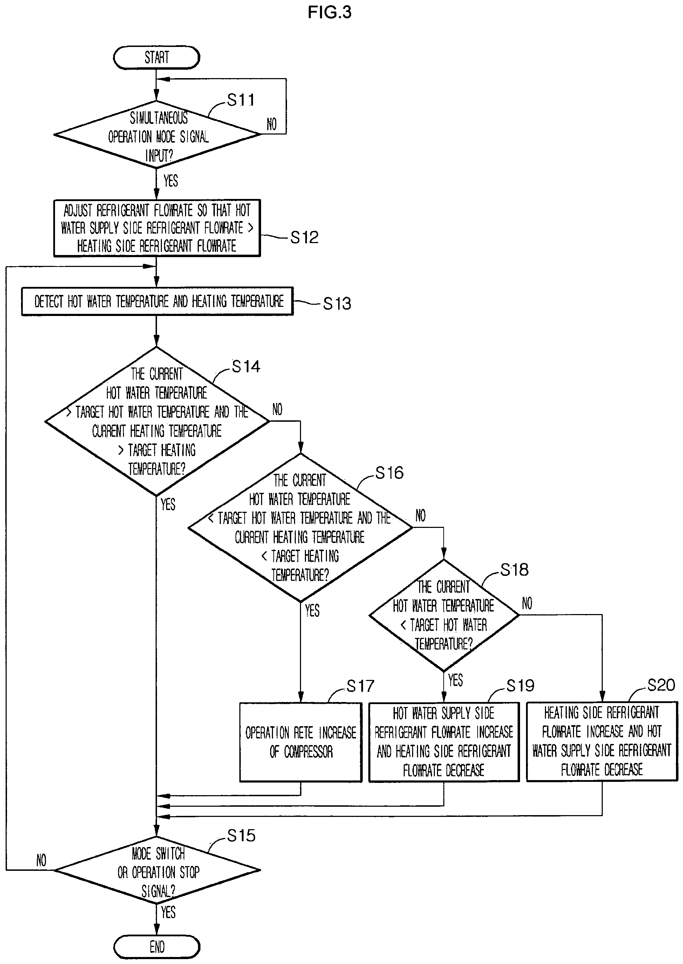

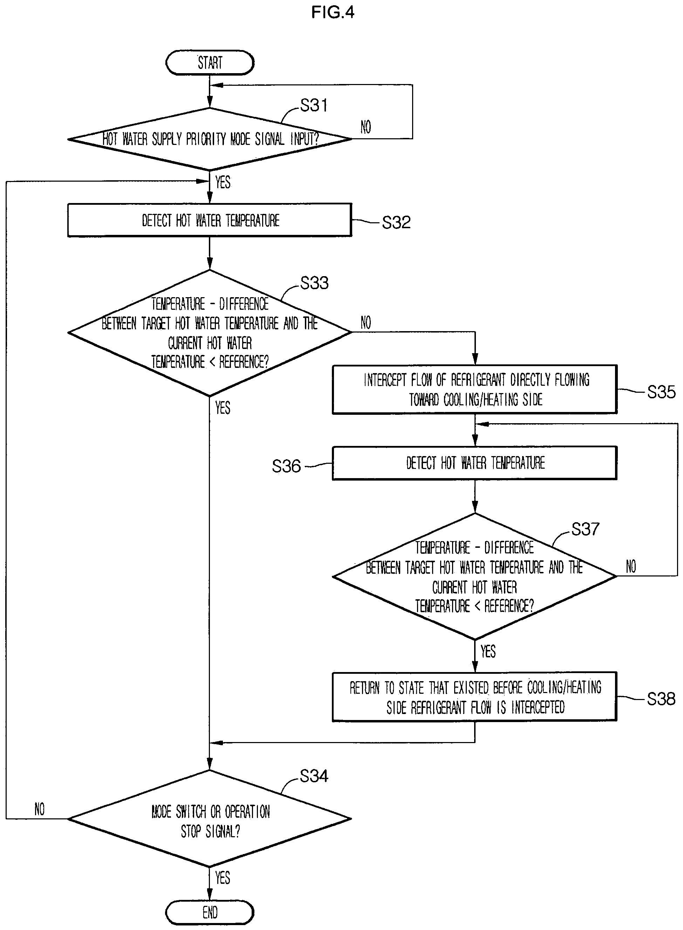

Fig. 2 is a control block diagram of the hot water supply device associated with the heat pump according to the first embodiment. Fig. 3 is a flowchart illustrating a control flow in case where a hot water supply device associated with a heat pump is operated in hot water supply and heating modes at the same time according to an embodiment. Fig. 4 is a flowchart illustrating a control flow in case where a hot water supply device associated with a heat pump is operated in a hot water supply priority mode according to an embodiment.

Referring to Fig. 2, the hot water supply device 1 associated with the heat pump includes a hot water temperature detection part 171 for detecting a hot water temperature, a cooling/heating temperature detection part 172 for detecting a cooling/heating temperature, an input part 173 in which various signals for operation are inputted, and a control part 175 for controlling operations of the hot water supply side flowrate adjustment part 132 and the cooling/heating side flowrate adjustment part 131 according to signals transmitted from the hot water temperature detection part 171, the cooling/heating temperature detection part 172, and the input part 173.

Here, the hot water temperature represents a temperature of a hot water object, and the cooling/heating temperature represents a temperature of a cooling/heating object. For example, the hot water temperature may be a water discharge temperature supplied to the user through the water discharge passage 128, and the cooling/heating temperature may be an indoor temperature. The signals transmitted from the hot water termperature detection part 171, the cooling/heating temperature detection part 172, and the input part 173 may be signals corresponding to the hot water temperature and the cooling/heating temperature and signals inputted through the input part 173.

Next, referring to Fig. 3, a control flow when the hot water supply device 1 associated with the heat pump performs the hot water supply and heating operations at the same time will be described. First, during the operation of the hot water supply device 1 associated with the heat pump, a signal for a simultaneous operation mode is inputted in operation S11, a hot water supply side refrigerant flowrate is adjusted greater than a heating side refrigerant flowrate in operation S12.

In detail, when the signal for operating the simultaneous operation mode is inputted, an open degree of the hot water supply side flowrate adjustment part 132 for adjusting the hot water supply side refrigerant flowrate is adjusted greater than that of the cooling/heating side flowrate adjustment part 131 for adjusting the heating side refrigerant flowrate. That is, when the hot water supply device 1 associated with the heat pump is operated in the simultaneous operation mode, primarily, the hot water supply side refrigerant flowrate is greater than the heating side refrigerant flowrate. Thus, in the simultaneous operation mode, primarily, the hot water supply capability is greater than the cooling/heating capability.

Next, the hot water temperature and the heating temperature are detected in operation S13. When the current hot water temperature is above a target hot water temperature and the current heating temperature is above a target heating temperature in operation S14, the hot water temperature and the heating temperature are detected in operation S13 unless a signal for a mode switch or an operation stop is inputted in operation S15. Here, the target hot water temperature and the target heating temperature represent target temperature values present to temperatures adequate for the user with respect to the hot water supply and heating objects.

However, when the current hot water temperature is less than the target hot water temperature and the current heating temperature is less than the target heating temperature in operation S16, an operation ratio of the compressor 101 is increased in operation S17.

However, when the current hot water temperature is less than the target hot water temperature and the current heating temperature is above the target heating temperature in operation S18, the hot water supply side refrigerant flowrate is increased and the heating side refrigerant flowrate is decreased in operation S19. That is, the open degree of the hot water supply side flowrate adjustment part 132 is increased and the open degree of the cooling/heating side flowrate adjustment part 131 is decreased.

However, when the current heating temperature is less than the target heating temperature and the current hot water temperature is above the target hot water temperature in operation S18, the heating side refrigerant flowrate is increased and the hot water supply side refrigerant flowrate is decreased in operation S20. That is, the open degree of the cooling/heating side flowrate adjustment part 131 is increased and the open degree of the hot water supply side flowrate adjustment part 132 is decreased.

After the operation ratio of the compressor 101 is increased or the hot water supply side refrigerant flowrate and the heating side refrigerant flowrate are changed, the hot water temperature and the heating temperature are detected again in operation S13 unless the signal for the mode switch or the operation stop is inputted in operation S15.

That is, according to the above-described processes, when the hot water supply device 1 associated with the heat pump performs the simultaneous hot water supply and heating operations, primarily, the hot water supply side refrigerant flowrate is maintained greater than the heating side refrigerant flowrate, and then, the hot water supply capability and the heating capability may be adequately varied according to a change of the hot water supply load and the heating load.

For example, when the current hot water temperature is below the target hot water temperature and the current heating temperature excesses the target heating temperature, the hot water supply load is greater than the heating load. Thus, it is necessary that the hot water supply capability is greater than the heating capability. According to the the hot water supply device 1 associated with the heat pump, in this case, since the hot water supply side refrigerant flowrate is greater than the heating side refrigerant flowrate, the hot water supply capability is greater than the heating capability. Thus, the current hot water temperature may further easily reach the target hot water temperature.

When the current heating temperature is less than the target heating temperature and the current hot water temperature excesses the target hot water temperature, the heating side refrigerant flowrate is greater than the hot water supply side refrigerant flowrate. Thus, since the heating capability is greater than the hot water supply capability, the current heating temperature may further easily reach the target hot water temperature.

Also, when the current hot water temperature is less than the target hot water temperature and the current heating temperature is less than the target heating temperature, the hot water supply load is greater than the heating load. Thus, it is necessary to increase both the hot water supply capability and the heating capability. According to the the hot water supply device 1 associated with the heat pump, in this case, since the operation ratio of the compressor 101 is increased to simultaneously increase the hot water supply side and heating side refrigerant flowrates and further increase a temperature of the discharge side refrigerant of the compressor 101, both the hot water supply capability and the heating capability may be improved. Thus, the current hot water temperature and the current heating temperature may futher easily reach the target hot water temperature and the target heating temperature, respectively.

Referring to Fig. 4, during the operation of the hot water supply device 1 associated with the heat pump, a signal for operating a hot water supply priority mode is inputted in operation S32, the hot water temperature is detected in operation S32.

When a difference between the target hot water temperature and the current hot water temperature is less than a reference temperature difference in operation S33, the hot water temperature is detected again in operation S32 unless the signal for the mode switch or the operation stop is inputted in operation S34.

However, when the difference between the target hot water temperature and the current hot water temperature is above the reference temperature difference in operation S35, a flow of the cooling/heating side refrigerant is intercepted in operation S35. That is, the flow of the refrigerant bypassing the hot water supply heat exchanger 121 and directly introduced into the cooling/heating switch part 105 is intercepted. On the other hand, the entire refrigerant discharged from the compressor 101 passes through the hot water supply heat exchanger 121, and then is introduced into the main refrigerant circuit 10, i.e., the cooling/heating side.

Next, the hot water temperature is detected again in operation S36. If the difference between the target hot water temperature and the current hot water temperature is above the reference temperature difference in operation S37, the processes in which the hot water temperature is detected and the difference between the target hot water temperature and the current hot water temperature is compared to the reference temperature difference are repeatedly performed in operations S36 and S37.

However, when the difference between the target hot water temperature and the current hot water temperature is less than the reference temperature difference in operation S37, the hot water supply device 1 associated with the heat pump returns to a state that existed before the cooling/heating side refrigerant flow is intercepted in operation S38. Unless the signals for the mode switch and operation stop are inputted in operation 34, the hot water temperature is detected again in operation S32.

The hot water supply priority mode will be described as an example. During the simultaneous hot water supply and heating operations of the hot water supply device 1 associated with the heat pump, in case where the operation of the hot water supply device 1 associated with the heat pump is switched into the hot water supply priority mode, when the difference between the target hot water temperature and the current hot water temperature is less than the reference temperature difference, the simultaneous hot water supply and heating operations are continuously performed. However, during the hot water supply and heating operation, when the user uses the water stored in the hot water supply tank 125, water is introduced from the outside into the hot water supply tank 125 to decrease the water discharge temperature, i.e., the hot water temperature. Here, when the current hot water temperature is decreased within a range in which the difference between the target hot water temperature and the current hot water temperature is less than the reference temperature difference, the exisiting hot water supply and heating operations are continuously performed.

However, when the hot water temperature is decreased and thus the difference between the target hot water temperature and the current hot water temperature is above the reference temperature difference, since the refrigerant passing through the hot water supply heat exchanger 121 is introduced into the the indoor heat exchanger 102 even though the exclusive hot water supply operation is performed, the heating may be continuously performed. Thus, since the entire refrigerant discharged from the compressor 101 passes through the hot water supply heat exchanger 121, the hot water supply capability may be maximized.

When the exclusive hot water supply operation is performed to increase the hot water temperature and the difference between the target hot water temperature and the current hot water temperature is reduced within the reference temperature difference, the operation of the hot water supply device 1 associated with the heat pump returns again to the simultaneous hot water supply and heating operation mode. Also, whether the hot water temperature is decreased so that the difference between the target hot water temperature and the current hot water temperature is above the reference temperature difference is continuously confirmed.

During the simultaneous hot water supply and cooling operations of the hot water supply device 1 associated with the heat pump, in case where the operation of the hot water supply device 1 associated with the heat pump is switched into the hot water supply priority mode, the difference between the target hot water temperature and the current hot water temperature is above the reference temperature difference. Thus, when the operation of the hot water supply device 1 associated with the heat pump returns again after the exclusive hot water supply operation is performed, the operation of the hot water supply device 1 associated with the heat pump returns to the simultaneous hot water supply and cooling operation mode.

Here, the reference temperature difference represents a difference between the target hot water temperature and the current hot water temperature that is a standard for determining whether the exlusive hot water supply operation is required.

In more detail, when the difference between the target hot water temperature and the current hot water temperature is small, the current hot water temperature may relatively quickly reach the target hot water temperature even though the entire capability of the hot water supply device 1 associated with the heat pump is distributed into the hot water supply and the heating operations. However, in case where the difference between the target hot water temperature and the current hot water temperature is large, when the entire capability of the hot water supply device 1 associated with the heat pump is distributed into the hot water supply and the heating operations, it may take up too much time that the current hot water temperature reaches the target hot water temperature.

In this case, since the exlusive hot water supply operation is temporarily performed in the hot water supply device 1 associated with the heat pump, the entire capability of the hot water supply device 1 associated with the heat pump may be relatively concentrated into the hot water supply operation. Thus, the current hot water temperature may quickly and easily reach the target hot water temperature.

Here, the difference between the target hot water temperature and the current hot water temperature that is a standard for determining whether the entire capability of the hot water supply device 1 associated with the heat pump is distributed into the hot water supply and the heating operations or concentrated into the hot water supply operation is the reference temperature difference.

According to the above-described processes, there is an advantage that the hot water supply capability and the heating capability may be optimized according to a change of the hot water supply load.

In more detail, the hot water temperature is relatively greatly changed in case where the user uses the hot water when compared to a change of the hot water temperature due to different factors. That is, during the usage of the hot water supply device 1 associated with the heat pump, the hot water supply load may be significantly changed when compared to the heating load.

According to the hot water supply device 1 associated with the heat pump, when the hot water supply load is significantly increased, i.e., the hot water temperature is significantly decreased, since the exlusive hot water supply operation is performed to relatively concentrate the entire capability of the hot water supply device 1 associated with the heat pump into the hot water supply operation, the hot water temperature may quickly and easily reach the target hot water temperature.

When the hot water temperature approaches the target hot water temperature, since the operation of the hot water supply device 1 associated with the heat pump automatically returns to a state that existed before the exlusive hot water supply operation is performed, the hot water supply capability and the heating capability may be optimized according to the change of the hot water load and the heating load.

Hereinafter, a hot water supply device associated with a heat pump according to a second embodiment will be described in detail with reference to the accompanying drawing. This embodiment is different from the first embodiment in that a hot water discharge side refrigerant is directly introduced in an indoor heat exchanger or an outdoor heat exchanger according to a heating operation or a cooling operation. In the present embodiment, description with respect to the same constition and control method as those of the first embodiment will be quoted from the description of the first embodiment.

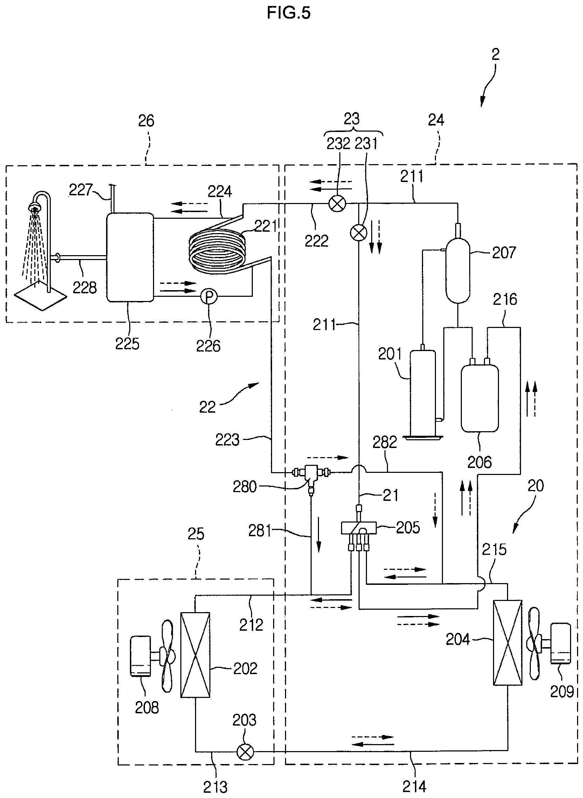

Fig. 5 is a schematic view of a hot water supply device associated with a heat pump according to a second embodiment.

Referring to Fig. 5, in the present embodiment, a hot water supply device 2 associated with a heat pump includes an indoor side guide pipe 281 guiding a refrigerant flowing into a hot water discharge side pipe 223 into an indoor heat exchanger connection pipe 212 and an outdoor side guide pipe 282 guiding the refrigerant flowing into the hot water discharge side pipe 223 into an outdoor heat exchanger connection pipe 215. The hot water supply device 2 associated with the heat pump further includes a hot water supply side flow switch part 280 for selectively switching a flow direction of the refrigerant flowing into the hot water discharge side pipe 223 into one of the indoor side guide pipe 281 and the outdoor side guide pipe 282.

The hot water supply side flow switch part 280 is connected to the hot water discharge side pipe 223, the indoor side guide pipe 281, and the outdoor side guide pipe 282. Also, the hot water supply side flow switch part 280 guides the hot water discharge side refrigerant into the indoor side guide pipe 281 or the outdoor side guide pipe 282 according to a heating operation or a cooling operation.

The indoor side guide pipe 281 has one end connected to the hot water supply side flow switch part 280 and the other end connected to the indoor heat exchanger connection pipe 212. The outdoor side guide pipe 282 has one end connected to the hot water supply side flow switch part 280 and the other end connected to the outdoor heat exchanger connection pipe 215.

A refrigerant flow according to the present embodiment will be described. First, in case of the heating operation, the hot water discharge side refrigerant is directly introduced into the indoor heat exchanger 202 along the indoor side guide pipe 281 and the indoor heat exchanger connection pipe 212. Here, the hot water supply side flow switch part 280 maintains a state in which the hot water discharge side pipe 223 communicates with the indoor side guide pipe 281.

Also, in case of the cooling operation, the hot water discharge side refrigerant is directly introduced into the outdoor heat exchanger 204 along the outdoor side guide pipe 282 and the indoor heat exchanger connection pipe 215. Here, the hot water supply side flow switch part 280 maintains a state in which the hot water discharge side pipe 223 communicates with the outdoor side guide pipe 282.

According to the present embodiment, since the refrigerant passing through the hot water supply heat exchanger 221, i.e., a hot water supply side is introduced into the indoor heat exchanger 202 or the outdoor heat exchanger 204 without passing through a cooling/heating switch part 205, a pressure loss generated by passing through the cooling/heating switch part 205 may be minimized.

Hereinafter, a hot water supply device associated with a heat pump according to a third embodiment will be described in detail with reference to the accompanying drawing. This embodiment is different from the first embodiment in that a hot water discharge side refrigerant bypasses an indoor heat exchanger or is directly introduced into an outdoor heat exchanger according to a heating operation or a cooling operation. In the present embodiment, description with respect to the same constition and control method as those of the first embodiment will be quoted from the description of the first embodiment.

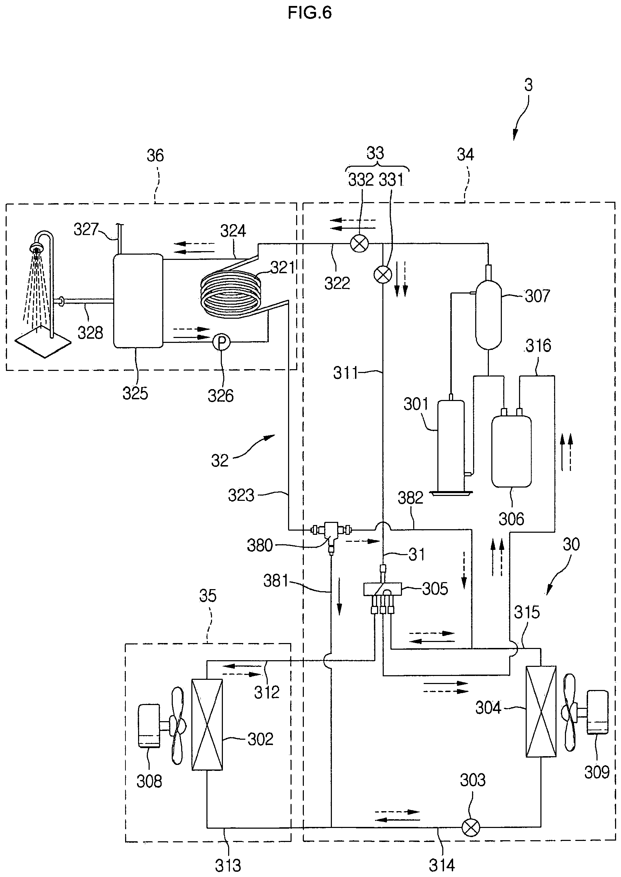

Fig. 6 is a schematic view of a hot water supply device associated with a heat pump according to a third embodiment.

Referring to Fig. 6, in the present embodiment, a hot water supply device 3 associated with a heat pump includes an indoor side guide pipe 381 guiding a refrigerant flowing into a hot water discharge side pipe 323 into an indoor heat exchanger 302 an expander connection pipe 113 and an outdoor side guide pipe 382 guiding the refrigerant flowing into the hot water discharge side pipe 323 into an outdoor heat exchanger connection pipe 315. The hot water supply device 3 associated with the heat pump further includes a hot water supply side flow switch part 380 for selectively switching a flow direction of the refrigerant flowing into the hot water discharge side pipe 323 into one of the indoor side guide pipe 381 and the outdoor side guide pipe 382.

The hot water supply side flow switch part 380 is connected to the hot water discharge side pipe 323, the indoor side guide pipe 381, and the outdoor side guide pipe 382. Also, the hot water supply side flow switch part 380 guides the hot water discharge side refrigerant into the indoor side guide pipe 381 or the outdoor side guide pipe 382 according to a heating operation or a cooling operation.

The indoor side guide pipe 381 has one end connected to the hot water supply side flow switch part 380 and the other end connected to the indoor heat exchanger 302 the expander connection pipe 113. The outdoor side guide pipe 382 has one end connected to the hot water supply side flow switch part 380 and the other end connected to the outdoor heat exchanger connection pipe 315.

Although the indoor side guide pipe 381 and the expander 303 are installed in an outdoor unit 34 in the present embodiment, the expander 303 may be installed in an indoor unit 35 and the indoor side guide pipe 381 connects the outdoor unit 34 to the indoor unit 35.

A refrigerant flow according to the present embodiment will be described. First, in case of the heating operation, the hot water discharge side refrigerant is introduced into the indoor heat exchanger 302 the expander connection pipe 113 along the indoor side guide pipe 381. Also, the hot water discharge side refrigerant is introduced into the expander 303 together with the refrigerant condensed while passing through the indoor heat exchanger 302. That is, the hot water discharge side refrigerant bypasses the indoor heat exchanger 302. Here, the hot water supply side flow switch part 380 maintains a state in which the hot water discharge side pipe 323 communicates with the indoor side guide pipe 381.

Also, in case of the cooling operation, the hot water discharge side refrigerant is directly introduced into the outdoor heat exchanger 304 along the outdoor side guide pipe 382 and the indoor heat exchanger connection pipe 315. Here, the hot water supply side flow switch part 380 maintains a state in which the hot water discharge side pipe 323 communicates with the outdoor side guide pipe 382.

According to the present embodiment, during the heating operation, the refrigerant passing through the hot water supply heat exchanger 321, i.e., the hot water supply side may be introduced into the expander 303 by bypassing the indoor heat exchanger 302. That is, since the heating side refrigerant discharged from the compressor 301 and directly introduced into the indoor heat exchanger 302 is introduced into the indoor heat exchanger 302 in a state where the heating side refrigerant is separated from the refrigerant cool-condensed while passing through the hot water supply heat exchanger 321, a temperature of the refrigerant introduced into the indoor heat exchanger 302 may be further increased. Thus, indoor heating performance through the indoor heat exchanger 302 may be further improved.

During the cooling operation, the refrigerant passing through the hot water supply heat exchanger 321, i.e., the hot water supply side may be discharged from the compressor 301 and condensed by passing through the outdoor heat exchanger 304 together with the refrigerant primarily condensed while a cooling side refrigerant directly introduced into the outdoor heat exchanger 304 passes through the hot water supply heat exchanger 321. Thus, since evaporation heat of the refrigerant in the outdoor heat exchanger 304 may be further increased, the cooling performance in the indoor heat exchanger 302 may be further improved.

Also, during the cooling operation, since the refrigerant passing through the hot water supply side may be directly introduced into the outdoor heat exchanger 304 by bypassing a cooling/heating switch valve 305, a refrigerant pressure loss by the cooling/heating switch part 305 may be minimized.

Hereinafter, a hot water supply device associated with a heat pump according to a fourth embodiment will be described in detail with reference to the accompanying drawing. This embodiment is different from the first embodiment in that a hot water discharge side refrigerant bypasses an indoor heat exchanger or is direcly introduced into a cooling/heating switch part according to a heating operation or a cooling operation. In the present embodiment, description with respect to the same constition and control method as those of the first embodiment will be quoted from the description of the first embodiment.

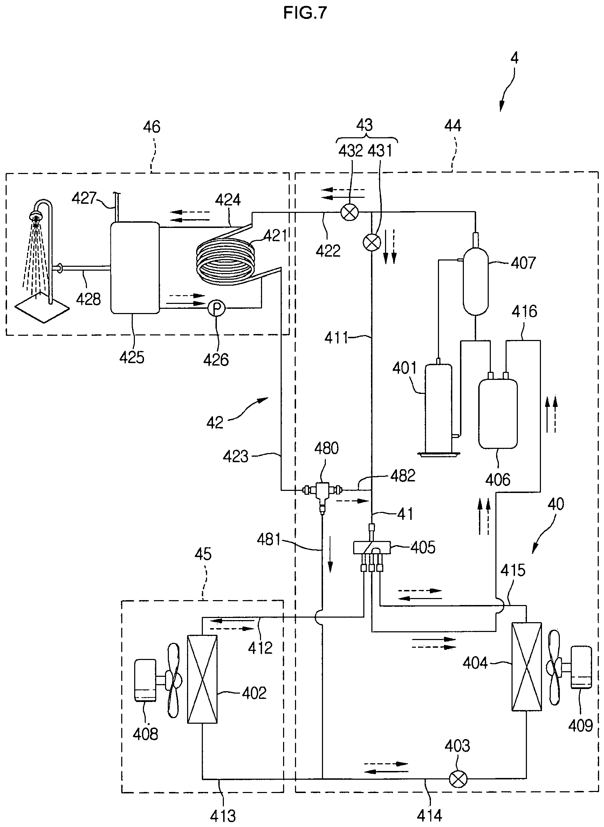

Fig. 7 is a schematic view of a hot water supply device associated with a heat pump according to a fourth embodiment.

Referring to Fig. 7, in the present embodiment, a hot water supply device 4 associated with a heat pump includes an indoor side guide pipe 481 guiding a refrigerant flowing into a hot water discharge side pipe 423 into an indoor heat exchanger 402 an expander connection pipe 413 and an outdoor side guide pipe 482 guiding the refrigerant flowing into the hot water discharge side pipe 423 into a compressor 401 discharge side pipe 411. The hot water supply device 4 associated with the heat pump further includes a hot water supply side flow switch part 480 for selectively switching a flow direction of the refrigerant flowing into the hot water discharge side pipe 423 into one of the indoor side guide pipe 481 and the outdoor side guide pipe 482.

The hot water supply side flow switch part 480 is connected to the hot water discharge side pipe 423, the indoor side guide pipe 481, and the outdoor side guide pipe 482. Also, the hot water supply side flow switch part 480 guides the hot water discharge side refrigerant into the indoor side guide pipe 481 or the outdoor side guide pipe 482 according to a heating operation or a cooling operation.

The indoor side guide pipe 481 has one end connected to the hot water supply side flow switch part 480 and the other end connected to the indoor heat exchanger 402 the expander connection pipe 413. The outdoor side guide pipe 482 has one end connected to the hot water supply side flow switch part 480 and the other end connected to the compressor 401 discharge side pipe 411. That is, the outdoor side guide pipe 482 directly guides the hot water discharge side refrigerant into the cooling/heating switch part 405.

Although the indoor side guide pipe 481 and the expander 403 are installed in an outdoor unit 44 in the present embodiment, the expander 403 may be installed in an indoor unit 45 and the indoor side guide pipe 481 connects the outdoor unit 44 to the indoor unit 45.

A refrigerant flow according to the present embodiment will be described. First, in case of the heating operation, the hot water discharge side refrigerant is introduced into the indoor heat exchanger 402 the expander connection pipe 413 along the indoor side guide pipe 481. Also, the hot water discharge side refrigerant is introduced into the expander 403 together with the refrigerant condensed while passing through the indoor heat exchanger 402. That is, the hot water discharge side refrigerant bypasses the indoor heat exchanger 402. Here, the hot water supply side flow switch part 480 maintains a state in which the hot water discharge side pipe 423 communicates with the indoor side guide pipe 481.

Also, in case of the cooling operation, the hot water discharge side refrigerant is directly introduced into the cooling/heating switch part 405 along the outdoor side guide pipe 482 and the compressor 401 discharge side pipe 411. Here, the hot water supply side flow switch part 480 maintains a state in which the hot water discharge side pipe 423 communicates with the outdoor side guide pipe 482.

According to the present embodiment, during the heating operation, the refrigerant passing through the hot water supply heat exchanger 421, i.e., the hot water supply side may be introduced into the expander 403 by bypassing the indoor heat exchanger 402. That is, since the heating side refrigerant discharged from the compressor 401 and directly introduced into the indoor heat exchanger 402 is introduced into the indoor heat exchanger 402 in a state where the heating side refrigerant is separated from the refrigerant cool-condensed while passing through the hot water supply heat exchanger 421, a temperature of the refrigerant introduced into the indoor heat exchanger 402 may be further increased. Thus, indoor heating performance through the indoor heat exchanger 402 may be further improved.

During the cooling operation, the refrigerant passing through the hot water supply heat exchanger 421, i.e., the hot water supply side may be discharged from the compressor 401 and condensed by passing through the outdoor heat exchanger 409 via the cooling/heating switch part 405 together with the refrigerant primarily condensed while a cooling side refrigerant directly introduced into the outdoor heat exchanger 409 passes through the hot water supply heat exchanger 421. Thus, since evaporation heat of the refrigerant in the outdoor heat exchanger 409 may be further increased, the cooling performance in the indoor heat exchanger 402 may be further improved.

Hereinafter, a hot water supply device associated with a heat pump according to a fifth embodiment will be described in detail with reference to the accompanying drawing. This embodiment is different from the first embodiment in that a hot water discharge side refrigerant is directly introduced into an outdoor heat exchanger during a cooling operation and is directly introduced into an indoor heat exchanger or bypasses the indoor heat exchanger during a heating operation. In the present embodiment, description with respect to the same constition and control method as those of the first embodiment will be quoted from the description of the first embodiment.

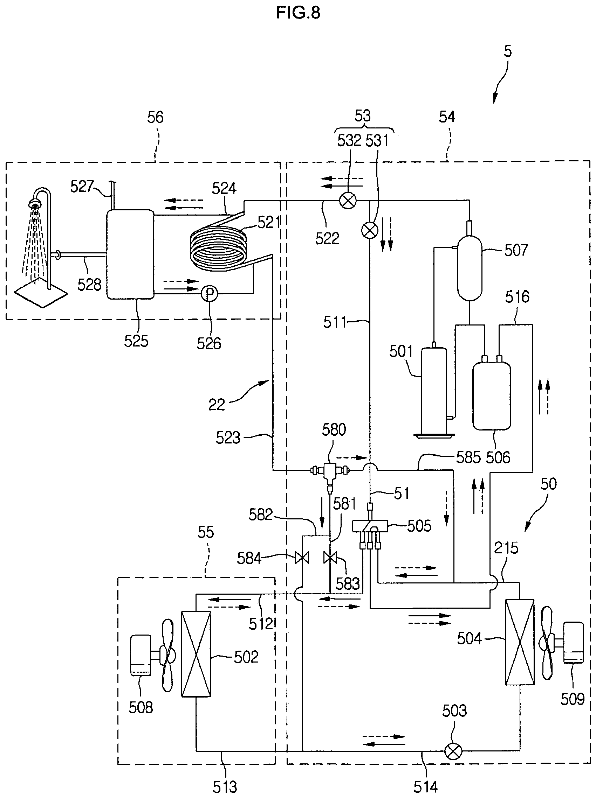

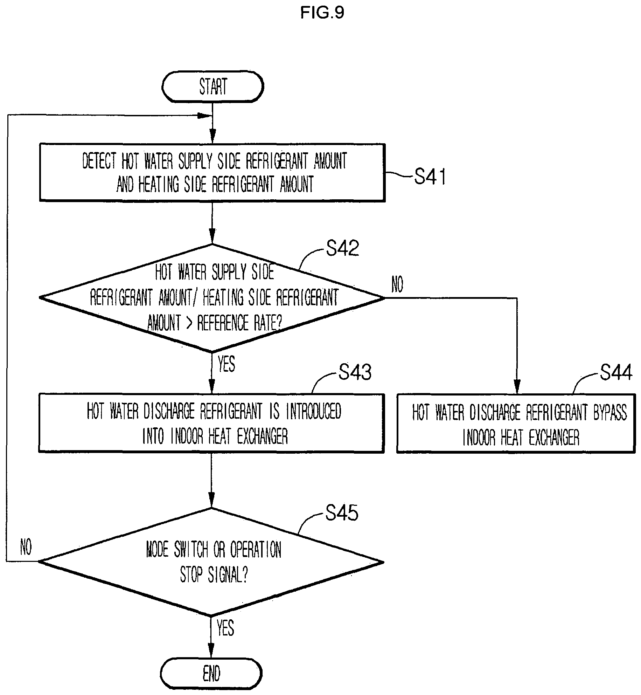

Fig. 8 is a schematic view of a hot water supply device associated with a heat pump according to a fifth embodiment. Fig. 9 is a flowchart illustrating a control flow in which a hot water discharge side refrigerant is introduced or bypassed into an indoor heat exchanger according to an amount of a hot water supply side refrigerant and an amount of heating/cooling side refrigerant of the hot water supply device associated with the heat pump according to the fifth embodiment.

Referring to Fig. 8, in the present embodiment, a hot water supply device 5 associated with a heat pump includes indoor side guide pipes 581 and 582 guiding a refrigerant flowing into a hot water discharge side pipe 523 into an indoor heat exchanger connection pipe 512 or an indoor heat exchanger an expander 503 connection pipe 513 and an outdoor side guide pipe 585 guiding the refrigerant flowing into the hot water discharge side pipe 523 into a compressor 511 discharge side pipe 511. The hot water supply device 5 associated with the heat pump further includes a hot water supply side flow switch part 580 for selectively switching a flow direction of the refrigerant flowing into the hot water discharge side pipe 523 into one of the indoor side guide pipes 581 and 582 and the outdoor side guide pipe 585.

The hot water supply side flow switch part 580 is connected to the hot water discharge side pipe 523, the indoor side guide pipes 581 and 582, and the outdoor side guide pipe 582. Also, the hot water supply side flow switch part 580 guides the hot water discharge side refrigerant into the indoor side guide pipes 581 and 582 or the outdoor side guide pipe 582 according to a heating operation or a cooling operation.

The indoor side guide pipes 581 and 582 include an indoor side inflow pipe 581 guiding the refrigerant into the indoor heat exchanger connection pipe 512 and an indoor side bypass pipe 582 guiding the refrigerant into the indoor heat excahanger expander 503 connection pipe 513. The indoor side inflow pipe 581 and the indoor side bypass pipe 582 have one ends connected to the hot water side flow switch part 580 in a state where the one ends are jointed with each other and the other ends respectively connected to the indoor heat exchanger connection pipe 512 and the indoor heat exchanger expander 503 connection pipe 513. That is, the indoor side guide pipes 581 and 582 may directly guide the hot water discharge side refrigerant to introduce the hot water discharge side refrigerant into the indoor heat exchanger 502 or to bypass the indoor heat exchanger 502.

An indoor side inflow valve 583 and an indoor side bypass valve 584 for selectively intercepting a flow of the refrigerant flowing into the indoor side inflow pipe 581 and the indoor side bypass pipe 582 are disposed in the indoor side inflow pipe 581 and the indoor side bypass pipe 582, respectively. That is, the indoor side inflow valve 583 selectively intercepts a flow of the refrigerant introduced into the indoor heat exchanger 502, and the indoor side bypass valve 584 selectively intercepts a flow of the refrigerant bypassing the indoor heat exchanger 502 after passing through the hot water supply side.

Also, the outdoor side guide pipe 585 has one end connected to the hot water supply side flow switch part 580 and the other end connected to the outdoor heat exchanger connection pipe 515. That is, the outdoor side guide pipe 585 directly guides the hot water discharge side refrigerant into the cooling/heating switch part 505.

Although the indoor side guide pipes 581 and 582 and the expander 503 are installed in an outdoor unit 54 in the present embodiment, the expander 503 may be installed in an indoor unit 55 and the indoor side guide pipes 581 and 582 connect the outdoor unit 54 to the indoor unit 55.

A refrigerant flow according to the present embodiment will be described. First, in case of the heating operation, the hot water discharge side refrigerant passes through the hot water supply side flow switch part 580 along the hot water discharge side pipe 523 and is introduced into the indoor side guide pipes 581 and 582. Here, the hot water supply side flow switch part 580 maintains a state in which the hot water discharge side pipe 523 communicates with the indoor side guide pipes 581 and 582.

Also, the refrigerant introduced into the indoor side guide pipes 581 and 582 may be directly introduced into the indoor heat exchanger 502 along the indoor side inflow pipe 581 and bypass the indoor heat exchanger 502 along the indoor side bypass pipe 582. In more detail, in a state where the indoor side bypass valve 584 is closed and the indoor side inflow valve 583 is opened, the hot water discharge side refrigerant is directly introduced into the indoor heat exchanger 502. Also, in a state where the indoor side inflow valve 583 is closed and the indoor side bypass valve 584 is opened, the hot water discharge side refrigerant bypasses the indoor heat exchanger 502.

In case where the refrigerant introduced into the indoor side guide pipes 581 and 582 is directly introduced into the indoor heat exchanger 502, the refrigerant may be introduced into the indoor heat exchanger 502 together with the heating side refrigerant discharged from the compressor 511 to directly flow toward the indoor heat exchanger 502. Also, in case where the refrigerant introduced into the indoor side guide pipes 581 and 582 bypasses the indoor heat exchanger 502, the refrigerant may be introduced into the expander 503 together with the refrigerant condensed while passing through the indoor heat exchanger 502.

In case of the cooling operation, the hot water discharge side refrigerant is directly introduced into the indoor heat exchanger 502 along the outdoor side guide pipe 585 and the outdoor heat exchanger connection pipe 515. Here, the hot water supply side flow switch part 580 maintains a state in which the hot water discharge side pipe 523 communicates with the outdoor side guide pipe 585.

Referring to Fig. 9, during the heating operation, a flow direction of the refrigerant passing through the hot water supply heat exchanger 521, i.e., the hot water supply side may be selectively switched to directly introduce the refrigerant into the indoor heat exchanger 502 or bypass the indoor heat exchanger 502 according to a ratio of the hot water supply side refrigerant flowrate and the heating side refrigerant flowrate.

In more detail, when the hot water supply device 5 associated with the heat pump performs the heating operation, the hot water supply side refrigerant flowrate and the heating side refrigerant flowrate are detected in operation 41. Here, for example, the hot water supply side refrigerant flowrate and the heating side refrigerant flowrate may be detected using open degrees of a hot water supply flowrate adjustment part 532 and a heating side flowrate adjustment part 531.

Comparing the hot water supply side refrigerant flowrate to the heating side refrigerant flowrate, when a rate of the hot water supply side refrigerant flowrate to the heating side refrigerant flowrate is above a reference rate in operation S42, the indoor side bypass valve 584 is closed and the indoor side inflow valve 583 is opened. Thus, the hot water discharge side refrigerant may be introduced into the indoor heat exchanger in operation S43.

However, when a rate of the hot water supply side refrigerant flowrate to the heating side refrigerant flowrate is below the reference rate in operation S42, the indoor side influw valve 583 is closed and the indoor side bypass valve 584 is opened. Thus, the hot water discharge side refrigerant may bypass the indoor heat exchanger 502 in operation S44.

Next, unless a signal for a mode switch or operation stop is inputted in operation S45, the hot water supply side refrigerant flowrate and the heating side refrigerant flowrate are detected again in operation S41.

According to the present embodiment, the hot water supply capability and the heating capability may be optimized according to the operation state.

In more detail, in case where the hot water supply device 5 associated with the heat pump performs the heating operation, when the hot water supply side refrigerant flowrate is relatively greater than the heating side refrigerant flowrate, the heating side refrigerant flowrate may be relatively reduced to deteriorate the heating capability. However, in the present embodiment, since the refrigerant passing through the hot water supply side is introduced into the indoor heat exchanger 502, the refrigerant flowrate passing through the indoor heat exchanger 502 may be increased to compensate the indoor heating capability.

On the other hand, when the hot water supply side refrigerant flowrate is relatively less than the heating side refrigerant flowrate, the refrigerant passing through the hot water supply side bypasses the indoor heat exchanger 502. Thus, since the heating side refrigerant is introduced into the indoor heat exchanger 502 in a state where the heating side refrigerant is separated from the hot water supply side refrigerant, the refrigerant introduced into the indoor heat exchanger 502 may be increased in temperature. Therefore, the indoor heating capability may be further improved.

During the cooling operation, the refrigerant passing through the hot water supply heat exchanger 521, i.e., the hot water supply side may be discharged from the compressor 501 and condensed by passing through the outdoor heat exchanger 509 via the cooling/heating switch part 505 together with the refrigerant primarily condensed while a cooling side refrigerant directly introduced into the outdoor heat exchanger 509 passes through the hot water supply heat exchanger 521. Thus, since evaporation heat of the refrigerant in the outdoor heat exchanger 509 may be further increased, the cooling performance in the indoor heat exchanger 502 may be further improved.

Hereinafter, a hot water supply device associated with a heat pump according to a sixth embodiment will be described in detail with reference to the accompanying drawing. This embodiment is different from the first embodiment in that a refrigerant flowing between an indoor heat exchanger and an outdoor heat exchanger is injected into a compressor. In the present embodiment, description with respect to the same constition and control method as those of the first embodiment will be quoted from the description of the first embodiment.

Fig. 10 is a schematic view of a hot water supply device associated with a heat pump according to a sixth embodiment.

Referring to Fig. 10, a hot water supply device 6 associated with a heat pump further includes a constitution for injecting a refrigerant flowing between an indoor heat exchanger 602 and an outdoor heat exchanger 604 into a compressor 601.

In detail, the compressor 601 according to the present embodiment is provided with a multi-stage compressor including a lower end compression part 681 in which a refrigerant is primarily compressed and an intermediate compression part 682 in which the refrigerant passing through the lower end compression part 681 is compressed together with the injected refrigerant.

In the present embodiment, the hot water supply device 6 associated with the heat pump includes a phase separator 683 in which a refrigerant condensed in one of the indoor heat exchanger 602 and the outdoor heat exchanger 604 and flowing into the other one of the indoor heat exchanger 602 and the outdoor heat exchanger 604 is separated into a vapor refrigerant and a liquid refrigerant and an injection pipe 684 guiding the vapor refrigerant separated in the phase separator 683 into the intermediate compression part 682.

According to the present embodiment, since the refrigerant flowing between the indoor heat exchanger 602 and the outdoor heat exchanger 604 may be injected into the compressor 601, an amount of the refrigerant flowing into the outdoor heat exchanger 604 may be increased to improve a heating capability. In particular, when the hot water supply device 6 associated with the heat pump is installed in an extreme cold front area, evaporation heat of the refrigerant in the outdoor heat exchanger 604 may be decreased to deteriorate the whole heating capability. However, as described above, the refrigerant may be injected to compensate the heating capability.

An injection valve for selectively closing the injection pipe 684 may be further provided to selectively perform the injection of the refrigerant toward the compressor 601 according to an ambient temperature. For example, when the external termperature is above a reference temperature, the injection valve is maintained in a close state. Also, when the ambient temperature is less than the reference temperature, the injection valve is maintained in an open state.

Hereinafter, a hot water supply device associated with a heat pump according to a seventh embodiment will be described in detail with reference to the accompanying drawing. This embodiment is different from the first embodiment in that a hot water discharge side refrigerant is directly introduced in an indoor heat exchanger or an outdoor heat exchanger according to a heating operation or a cooling operation. In the present embodiment, description with respect to the same constition and control method as those of the sixth embodiment will be quoted from the description of the sixth embodiment.

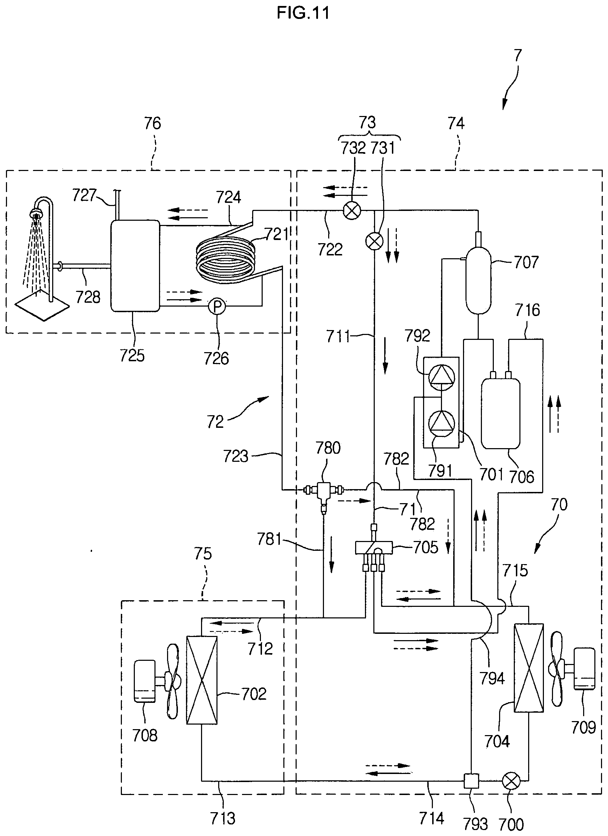

Fig. 11 is a schematic view of a hot water supply device associated with a heat pump according to a seventh embodiment.

Referring to Fig. 11, in the present embodiment, a hot water supply device 7 associated with a heat pump includes an indoor side guide pipe 781 guiding a refrigerant flowing into a hot water discharge side pipe 723 into an indoor heat exchanger connection pipe 712 and an outdoor side guide pipe 282 guiding the refrigerant flowing into the hot water discharge side pipe 723 into an outdoor heat exchanger connection pipe 715. The hot water supply device 7 associated with the heat pump further includes a hot water supply side flow switch part 780 for selectively switching a flow direction of the refrigerant flowing into the hot water discharge side pipe 723 into one of the indoor side guide pipe 781 and the outdoor side guide pipe 782.

The hot water supply side flow switch part 780 is connected to the hot water discharge side pipe 723, the indoor side guide pipe 781, and the outdoor side guide pipe 782. Also, the hot water supply side flow switch part 780 guides the hot water discharge side refrigerant into the indoor side guide pipe 781 or the outdoor side guide pipe 782 according to a heating operation or a cooling operation.

The indoor side guide pipe 781 has one end connected to the hot water supply side flow switch part 780 and the other end connected to the indoor heat exchanger connection pipe 712. The outdoor side guide pipe 782 has one end connected to the hot water supply side flow switch part 780 and the other end connected to the outdoor heat exchanger connection pipe 715.

A refrigerant flow according to the present embodiment will be described. First, in case of the heating operation, the hot water discharge side refrigerant is directly introduced into the indoor heat exchanger 702 along the indoor side guide pipe 781 and the indoor heat exchanger connection pipe 712. Here, the hot water supply side flow switch part 780 maintains a state in which the hot water discharge side pipe 723 communicates with the indoor side guide pipe 781.

Also, in case of the cooling operation, the hot water discharge side refrigerant is directly introduced into the outdoor heat exchanger 704 along the outdoor side guide pipe 782 and the indoor heat exchanger connection pipe 715. Here, the hot water supply side flow switch part 780 maintains a state in which the hot water discharge side pipe 723 communicates with the outdoor side guide pipe 782.

According to the present embodiment, since the refrigerant passing through the hot water supply heat exchanger, i.e., a hot water supply side is introduced into the indoor heat exchanger 702 or the outdoor heat exchanger 204 without passing through a cooling/heating switch part, a pressure loss generated by passing through the cooling/heating switch part 705 may be minimized.

## Claims

1. A hot water supply device (2) with a heat pump, the hot water supply device comprising:
a main refrigerant circuit (20) comprising a compressor (201), an indoor heat exchanger (202), an expander (203), and an outdoor heat exchanger (204) to form a refrigerant cycle; and
a hot water supply heat exchanger (221) connected to the main refrigerant circuit to perform hot water supply using a high-temperature refrigerant discharged from the compressor (201);
a cooling/heating switch part (205) installed at an outlet side of the compressor to change a flow direction of refrigerant received from the compressor toward one of the indoor heat exchanger (202) or the outdoor heat exchanger (204); and
a compressor discharge pipe (211) connected to an outlet of the compressor (201) to extend to an inlet of a flow rate adjustment part (23, 231, 232), wherein
the hot water supply device (2) further comprises:
a hot water inflow side pipe (222) branched from the compressor discharge pipe (211) to connect to the hot water supply heat exchanger (221);
a hot water discharge side pipe (223) connected with the hot water supply heat exchanger (221);
a cooling/heating side flow rate adjustment part (231) installed at the compressor discharge pipe (211), the cooling/heating side flow rate adjustment part (231) being openable to adjust the amount of the refrigerant flowing through the compressor discharge pipe (211);
a hot water supply side flowrate adjustment part (232) installed at the hot water inflow side pipe (222), the hot water supply side flowrate adjustment part being openable to adjust the amount of the refrigerant flowing through the hot water inflow pipe; and
a controller (175) configured to control open degree of the cooling/heating side flow rate adjustment part (231) and the hot water supply side flowrate adjustment part (232), and
wherein refrigerant passing through the hot water supply heat exchanger (221) is condensed and is additionally condensed through one of the indoor heat exchanger (202) and the outdoor heat exchanger (204),
wherein when a hot water supply load exceeds a cooling/heating load, the controller (175) controls the cooling/heating side flow rate adjustment part (231) and the hot water supply side flowrate adjustment part (232) such that at least one of a decrease of the open degree of the cooling/heating side flow rate adjustment part (231) or an increase of the open degree of the hot water supply side flowrate adjustment part (232) is performed while the hot water supply and cooling/heating operations are performed, the hot water supply device further comprising:
an indoor side guide pipe (281) guiding a refrigerant flowing in the hot water discharge side pipe (223) into the indoor heat exchanger (202);
an outdoor side guide pipe (282) guiding the refrigerant flowing in the hot water discharge side pipe (223) into the outdoor heat exchanger (204); and
a hot water supply side flow switch part (280) connected to the hot water discharge side pipe (223), the indoor side guide pipe (281) and the outdoor side guide pipe (282) and selectively switching a flow direction of the refrigerant flowing in the hot water discharge side pipe (223) into one of the indoor side guide pipe (281) and the outdoor side guide pipe (282).

2. The hot water supply device (2) according to claim 1, wherein, while a hot water priority operation is performed,
when a difference between the current hot water temperature and a target hot water temperature exceeds a reference temperature difference, the controller (175) controls the cooling/heating side flow rate adjustment part (231) such that the flow of the refrigerant bypassing the hot water supply heat exchanger (221) and directly introduced into the cooling/ heating switch part (205) is intercepted, and
thereafter, when the difference between the current hot water temperature and a target hot water temperature is decreased again to below the reference temperature difference, a refrigerant flow returns to a state that existed before the flow of the cooling/heating side refrigerant is intercepted.

3. The hot water supply device (2) according to claim 1 or 2, wherein, when a defrosting operation is performed, a reverse cycle refrigerant flow of the main refrigerant circuit is performed and the hot water supply is successively performed.

4. The hot water supply device (2) according to any of the preceding claims, wherein the compressor (201) is provided with a multi-stage compressor including a lower end compression part and an intermediate compression part in which the refrigerant passing through the lower end compression part is compressed, and
the hot water supply device (2) comprises:
a phase separator in which the refrigerant condensed in one of the indoor heat exchanger (202) and the outdoor heat exchanger (204) is separated into a vapor refrigerant and a liquid refrigerant; and
an injection pipe guiding the vapor refrigerant separated in the phase separator into the intermediate compression part.

5. The hot water supply device (2) according to any of the preceding claims, wherein the refrigerant passing through the hot water supply heat exchanger (221) is introduced into the cooling/heating switch part (205) during the heating operation and introduced between the indoor heat exchanger (202) and the outdoor heat exchanger (204) in the refrigerant cycle during the cooling operation.

6. The hot water supply device (2) according to any of the preceding claims, wherein the refrigerant passing through the hot water supply heat exchanger (221) is introduced between the cooling/heating switch part (205) and the indoor heat exchanger (202) in the refrigerant cycle during the heating operation and is introduced between the cooling/heating switch part (205) and the outdoor heat exchanger (204) in the refrigerant cycle during the cooling operation.

7. The hot water supply device (2) according to any of the preceding claims, wherein, during the heating operation, when a rate of refrigerant introduced into the hot water supply heat exchanger (221) to refrigerant discharge from the compressor (201) is above a reference rate, the refrigerant passing through the hot water supply heat exchanger (221) is introduced into the indoor heat exchanger (202), and
when the rate of refrigerant introduced into the hot water supply heat exchanger (221) to refrigerant discharge from the compressor (201) is below the reference rate, the refrigerant passing through the hot water supply heat exchanger bypasses the indoor heat exchanger (202).

8. The hot water supply device according to any of the preceding claims, wherein the refrigerant passing through the hot water supply heat exchanger (221) is introduced between the indoor heat exchanger (202) and the outdoor heat exchanger (204) in the refrigerant cycle during the heating operation and is introduced between the cooling/heating switch part (205) and the outdoor heat exchanger (204) in the refrigerant cycle during the cooling operation.

## Patentansprüche

1. Warmwasserzufuhrvorrichtung (2) mit einer Wärmepumpe, wobei die Warmwasserzufuhrvorrichtung aufweist:
einen Hauptkältemittelkreis (20) mit einem Kompressor (201), einem Innenwärmetauscher (202), einem Expander (203) und einem Außenwärmetauscher (204), um einen Kältemittelkreislauf zu bilden; und
einen Warmwasserzufuhr-Wärmetauscher (221), der mit dem Hauptkältemittelkreis verbunden ist, um eine Warmwasserzufuhr mit Hilfe eines Hochtemperatur-Kältemittels durchzuführen, das aus dem Kompressor (201) abgegeben wird;
ein Abkühlungs-/Erwärmungsumschaltteil (205), das an einer Auslassseite des Kompressors angebracht ist, um eine Durchflussrichtung von Kältemittel, das von dem Kompressor kommt, zum Innenwärmetauscher (202) oder Außenwärmetauscher (204) zu ändern; und
ein Kompressorabgaberohr (211), das mit einem Auslass des Kompressors (201) verbunden ist und sich zu einem Einlass eines Durchflussgeschwindigkeits-Einstellteils (23, 231, 232) erstreckt, wobei
die Warmwasserzufuhrvorrichtung (2) ferner aufweist:
ein warmwasserzuflussseitiges Rohr (222), das vom Kompressorabgaberohr (211) abzweigt, um mit dem Warmwasserzufuhr-Wärmetauscher (221) verbunden zu sein;
ein warmwasserabgabeseitiges Rohr (223), das mit dem Warmwasserzufuhr-Wärmetauscher (221) verbunden ist;
ein abkühlungs-/erwärmungsseitiges Durchflussgeschwindigkeits-Einstellteil (231), das am Kompressorabgaberohr (211) eingebaut ist, wobei das abkühlungs-/erwärmungsseitige Durchflussgeschwindigkeits-Einstellteil (231) öffnungsfähig ist, um die Menge des Kältemittels einzustellen, das durch das Kompressorabgaberohr (211) fließt;
ein warmwasserzufuhrseitiges Durchflussgeschwindigkeits-Einstellteil (232), das am warmwasserzuflussseitigen Rohr (222) eingebaut ist, wobei das warmwasserzufuhrseitige Durchflussgeschwindigkeits-Einstellteil öffnungsfähig ist, um die Menge des Kältemittels einzustellen, das durch das Warmwasser-Zuflussrohr fließt; und
eine Steuerung (175), die so konfiguriert ist, dass sie einen Öffnungsgrad des abkühlungs-/erwärmungsseitigen Durchflussgeschwindigkeits-Einstellteils (231) und des warmwasserzufuhrseitigen Durchflussgeschwindigkeits-Einstellteils (232) steuert, und
wobei den Warmwasserzufuhr-Wärmetauscher (221) durchlaufendes Kältemittel kondensiert und über den Innenwärmetauscher (202) oder den Außenwärmetauscher (204) zusätzlich kondensiert wird,
wobei, wenn eine Warmwasserzufuhrlast eine Abkühlungs-/Erwärmungslast übersteigt, die Steuerung (175) das abkühlungs-/erwärmungsseitige Durchflussgeschwindigkeits-Einstellteil (231) und das warmwasserzufuhrseitige Durchflussgeschwindigkeits-Einstellteil (232) so steuert, dass eine Verringerung des Öffnungsgrads des abkühlungs-/erwärmungsseitigen Durchflussgeschwindigkeits-Einstellteils (231) und/oder eine Erhöhung des Öffnungsgrads des warmwasserzufuhrseitigen Durchflussgeschwindigkeits-Einstellteils (232) durchgeführt wird, während der Warmwasserzufuhr- und Abkühlungs-/Erwärmungsbetrieb durchgeführt werden, wobei die Warmwasserzufuhrvorrichtung ferner aufweist:
ein innenseitiges Führungsrohr (281), das ein im warmwasserabgabeseitigen Rohr (223) fließendes Kältemittel in den Innenwärmetauscher (202) führt;
ein außenseitiges Führungsrohr (282), das das im warmwasserabgabeseitigen Rohr (223) fließende Kältemittel in den Außenwärmetauscher (204) führt; und
ein warmwasserzufuhrseitiges Durchflussumschaltteil (280), das mit dem warmwasserabgabeseitigen Rohr (223), dem innenseitigen Führungsrohr (281) und dem außenseitigen Führungsrohr (282) verbunden ist und eine Durchflussrichtung des im warmwasserabgabeseitigen Rohr (223) fließenden Kältemittels zum innenseitigen Führungsrohr (281) oder außenseitigen Führungsrohr (282) selektiv umschaltet.

2. Warmwasserzufuhrvorrichtung (2) nach Anspruch 1, wobei, während der Durchführung eines Warmwasserprioritätsbetriebs
wenn eine Differenz zwischen der aktuellen Warmwassertemperatur und einer Sollwarmwassertemperatur eine Referenztemperaturdifferenz übersteigt, die Steuerung (175) das abkühlungs-/erwärmungsseitige Durchflussgeschwindigkeits-Einstellteil (231) so steuert, dass der Durchfluss des Kältemittels, das den Warmwasserzufuhr-Wärmetauscher (221) umgeht und direkt in das Abkühlungs-/Erwärmungsumschaltteil (205) eingeleitet wird, unterbrochen wird, und
danach wenn die Differenz zwischen der aktuellen Warmwassertemperatur und einer Sollwarmwassertemperatur wieder unter die Referenztemperaturdifferenz verringert ist, ein Kältemitteldurchfluss zu einem Zustand zurückkehrt, der vorlag, bevor der Durchfluss des abkühlungs-/erwärmungsseitigen Kältemittels unterbrochen wurde.

3. Warmwasserzufuhrvorrichtung (2) nach Anspruch 1 oder 2, wobei bei Durchführung eines Auftaubetriebs ein Umkehrkreislauf-Kältemitteldurchfluss des Hauptkältemittelkreises durchgeführt wird und die Warmwasserzufuhr anschließend durchgeführt wird.

4. Warmwasserzufuhrvorrichtung (2) nach einem der vorstehenden Ansprüche, wobei der Kompressor (201) mit einem Mehrstufenkompressor versehen ist, der ein unteres Kompressionsteil und ein Zwischenkompressionsteil aufweist, in dem das das untere Kompressionsteil durchlaufende Kältemittel komprimiert wird, und
die Warmwasserzufuhrvorrichtung (2) aufweist:
einen Phasentrenner, in dem das Kältemittel, das im Innenwärmetauscher (202) oder Außenwärmetauscher (204) kondensiert wird, in ein dampfförmiges Kältemittel und ein flüssiges Kältemittel getrennt wird; und
ein Einspritzrohr, das das im Phasentrenner getrennte dampfförmige Kältemittel in das Zwischenkompressionsteil führt.

5. Warmwasserzufuhrvorrichtung (2) nach einem der vorstehenden Ansprüche, wobei das den Warmwasserzufuhr-Wärmetauscher (221) durchlaufende Kältemittel in das Abkühlungs-/Erwärmungsumschaltteil (205) während des Erwärmungsbetriebs eingeleitet und zwischen dem Innenwärmetauscher (202) und dem Außenwärmetauscher (204) im Kältemittelkreislauf während des Abkühlungsbetriebs eingeleitet wird.

6. Warmwasserzufuhrvorrichtung (2) nach einem der vorstehenden Ansprüche, wobei während des Erwärmungsbetriebs das den Warmwasserzufuhr-Wärmetauscher (221) durchlaufende Kältemittel zwischen dem Abkühlungs-/Erwärmungsumschaltteil (205) und dem Innenwärmetauscher (202) im Kältemittelkreislauf eingeleitet wird und während des Abkühlungsbetriebs zwischen dem Abkühlungs-/Erwärmungsumschaltteil (205) und dem Außenwärmetauscher (204) im Kältemittelkreislauf eingeleitet wird.

7. Warmwasserzufuhrvorrichtung (2) nach einem der vorstehenden Ansprüche, wobei, wenn während des Erwärmungsbetriebs eine Durchflussgeschwindigkeit von Kältemittel, das in den Warmwasserzufuhr-Wärmetauscher (221) eingeleitet wird, zu einer Kältemittelabgabe aus dem Kompressor (201) über einer Referenzgeschwindigkeit liegt, das den Warmwasserzufuhr-Wärmetauscher (221) durchlaufende Kältemittel in den Innenwärmetauscher (202) eingeleitet wird, und
wenn die Durchflussgeschwindigkeit von Kältemittel, das in den Warmwasserzufuhr-Wärmetauscher (221) eingeleitet wird, zu einer Kältemittelabgabe aus dem Kompressor (201) unter der Referenzgeschwindigkeit liegt, das den Warmwasserzufuhr-Wärmetauscher durchlaufende Kältemittel den Innenwärmetauscher (202) umgeht.

8. Warmwasserzufuhrvorrichtung nach einem der vorstehenden Ansprüche, wobei während des Erwärmungsbetriebs das den Warmwasserzufuhr-Wärmetauscher (221) durchlaufende Kältemittel zwischen dem Innenwärmetauscher (202) und dem Außenwärmetauscher (204) im Kältemittelkreislauf eingeleitet wird und während des Abkühlungsbetriebs zwischen dem Abkühlungs-/Erwärmungsumschaltteil (205) und dem Außenwärmetauscher (204) im Kältemittelkreislauf eingeleitet wird.

## Revendications

1. Dispositif de fourniture d'eau chaude (2) avec une pompe à chaleur, le dispositif de fourniture d'eau chaude comprenant :
un circuit réfrigérant principal (20) comprenant un compresseur (201), un échangeur de chaleur intérieur (202), un détendeur (203), et un échangeur de chaleur extérieur (204) pour former un cycle de fluide frigorigène ; et
un échangeur de chaleur de fourniture d'eau chaude (221) relié au circuit réfrigérant principal pour effectuer une fourniture d'eau chaude en utilisant un fluide frigorigène à haute température évacué du compresseur (201) ;
une partie de commutation de refroidissement/chauffage (205) installée à un côté de sortie du compresseur pour changer une direction d'écoulement du fluide frigorigène reçu du compresseur vers l'un parmi l'échangeur de chaleur intérieur (202) ou l'échangeur de chaleur extérieur (204) ; et
un tuyau d'évacuation du compresseur (211) relié à une sortie du compresseur (201) pour s'étendre vers une entrée d'une partie d'ajustement de débit (23, 231, 232), dans lequel le dispositif de fourniture d'eau chaude (2) comprend en outre :
un tuyau côté arrivée d'eau chaude (222) dérivé du tuyau d'évacuation du compresseur (211) pour une liaison à l'échangeur de chaleur de fourniture d'eau chaude(221);
un tuyau côté évacuation d'eau chaude (223) relié à l'échangeur de chaleur de fourniture d'eau chaude (221) ;
une partie d'ajustement de débit côté refroidissement/chauffage (231) installée au niveau du tuyau d'évacuation du compresseur (211), la partie d'ajustement de débit côté refroidissement/chauffage (231) pouvant être ouverte pour ajuster la quantité de fluide frigorigène s'écoulant à travers le tuyau de d'évacuation du compresseur (211) ;
une partie d'ajustement de débit côté fourniture d'eau chaude (232) installée au niveau du tuyau côté d'arrivée d'eau chaude (222), la partie d'ajustement de débit côté fourniture d'eau chaude pouvant être ouverte pour ajuster la quantité de fluide frigorigène s'écoulant à travers le tuyau d'arrivée d'eau chaude ; et
un contrôleur (175) configuré pour commander le degré d'ouverture de la partie d'ajustement de débit côté refroidissement/chauffage (231) et de la partie d'ajustement de débit côté fourniture d'eau chaude (232), et
dans lequel le fluide frigorigène passant à travers l'échangeur de chaleur de fourniture d'eau chaude (221) est condensé et est de surcroît condensé à travers l'un parmi l'échangeur de chaleur intérieur (202) et l'échangeur de chaleur extérieur (204),
dans lequel lorsqu'une charge de fourniture d'eau chaude dépasse une charge de refroidissement/chauffage, le contrôleur (175) commande la partie d'ajustement de débit côté refroidissement/chauffage (231) et la partie d'ajustement de débit côté fourniture d'eau chaude (232) de sorte qu'au moins une parmi une diminution du degré d'ouverture de la la partie d'ajustement de débit côté refroidissement/chauffage (231) ou une augmentation du degré d'ouverture de la partie d'ajustement de débit côté fourniture d'eau chaude (232) est effectuée alors que les opérations de fourniture d'eau chaude et de refroidissement/chauffage sont effectuées, le dispositif de fourniture d'eau chaude comprenant en outre :
un tuyau de guidage côté intérieur (281) guidant un fluide frigorigène s'écoulant dans le tuyau côté évacuation d'eau chaude (223) vers l'échangeur de chaleur intérieur (202) ;
un tuyau de guidage côté extérieur (282) guidant le fluide frigorigène s'écoulant dans le tuyau côté d'évacuation d'eau chaude (223) vers l'échangeur de chaleur extérieur (204) ; et
une partie de commutation d'écoulement côté fourniture d'eau chaude (280) reliée au tuyau côté évacuation d'eau chaude (223), au tuyau de guidage côté intérieur (281) et au tuyau de guidage côté extérieur (282) et commutant de manière sélective une direction d'écoulement du fluide frigorigène s'écoulant dans le tuyau côté évacuation d'eau chaude (223) vers l'un parmi le tuyau de guidage côté intérieur (281) et le tuyau de guidage côté extérieur (282).

2. Dispositif de fourniture d'eau chaude (2) selon la revendication 1, dans lequel, alors que l'opération de priorité d'eau chaude est effectuée,
lorsqu'une différence entre la température d'eau chaude actuelle et une température d'eau chaude cible dépasse une différence de température de référence, le contrôleur (175) commande la partie d'ajustement de débit côté refroidissement/chauffage (231) de sorte que l'écoulement du fluide frigorigène contournant l'échangeur de chaleur de fourniture d'eau chaude (221) et introduit directement dans la partie de commutation de refroidissement/chauffage (205) est intercepté, et
ensuite, lorsque la différence entre la température d'eau chaude actuelle et une température d'eau chaude cible est de nouveau diminuée au-dessous de la différence de température de référence, un écoulement de fluide frigorigène retourne dans un état qui existait avant que l'écoulement du fluide frigorigène côté refroidissement/chauffage soit intercepté.

3. Dispositif de fourniture d'eau chaude (2) selon la revendication 1 ou 2, dans lequel, lorsqu'une opération de dégivrage est effectuée, un écoulement de fluide frigorigène en cycle inverse du circuit de fluide frigorigène principal est effectué et la fourniture d'eau chaude est effectuée successivement.

4. Dispositif de fourniture d'eau chaude (2) selon l'une quelconque des revendications précédentes, dans lequel le compresseur (201) est pourvu d'un compresseur à étages multiples comprenant une partie de compression d'extrémité inférieure et une partie de compression intermédiaire dans laquelle le fluide frigorigène passant à travers la partie de compression d'extrémité inférieure est comprimé, et
le dispositif de fourniture d'eau chaude (2) comprend :
un séparateur de phases dans lequel le fluide frigorigène condensé dans l'un parmi l'échangeur de chaleur intérieur (202) et l'échangeur de chaleur extérieur (204) est séparé en un fluide frigorigène en phase vapeur et un fluide frigorigène en phase liquide ; et
un tuyau d'injection guidant le fluide frigorigène en phase vapeur séparé dans le séparateur de phases vers la partie de compression intermédiaire.

5. Dispositif de fourniture d'eau chaude (2) selon l'une quelconque des revendications précédentes, dans lequel le fluide frigorigène passant à travers l'échangeur de chaleur de fourniture d'eau chaude (221) est introduit dans la partie de commutation de refroidissement/chauffage (205) pendant l'opération de chauffage et introduit entre l'échangeur de chaleur intérieur (202) et l'échangeur de chaleur extérieur (204) dans le cycle de fluide frigorigène pendant l'opération de refroidissement.

6. Dispositif de fourniture d'eau chaude (2) selon l'une quelconque des revendications précédentes, dans lequel le fluide frigorigène passant à travers l'échangeur de chaleur de fourniture d'eau chaude (221) est introduit entre la partie de commutation de refroidissement/chauffage (205) et l'échangeur de chaleur intérieur (202) dans le cycle de fluide frigorigène pendant l'opération de chauffage et est introduit entre la partie de commutation de refroidissement/chauffage (205) et l'échangeur de chaleur extérieur (204) dans le cycle de fluide frigorigène pendant l'opération de refroidissement.

7. Dispositif de fourniture d'eau chaude (2) selon l'une quelconque des revendications précédentes, dans lequel, pendant l'opération de chauffage, lorsqu'une proportion du fluide frigorigène introduit dans l'échangeur de chaleur de fourniture d'eau chaude (221) pour l'évacuation du fluide frigorigène du compresseur (201) est au-dessus d'une proportion de référence, le fluide frigorigène passant à travers l'échangeur de chaleur de fourniture d'eau chaude (221) est introduit dans l'échangeur de chaleur intérieur (202), et
lorsque la proportion du fluide frigorigène introduit dans l'échangeur de chaleur de fourniture d'eau chaude (221) pour l'évacuation du fluide frigorigène du compresseur (201) est au-dessous de la proportion de référence, le fluide frigorigène passant à travers l'échangeur de chaleur de fourniture d'eau chaude contourne l'échangeur de chaleur intérieur (202).

8. Dispositif de fourniture d'eau chaude selon l'une quelconque des revendications précédentes, dans lequel le fluide frigorigène passant à travers l'échangeur de chaleur de fourniture d'eau chaude (221) est introduit entre l'échangeur de chaleur intérieur (202) et l'échangeur de chaleur extérieur (204) dans le cycle de fluide frigorigène pendant l'opération de chauffage et est introduit entre la partie de commutation de refroidissement/chauffage (205) et l'échangeur de chaleur extérieur (204) dans le cycle de fluide frigorigène pendant l'opération de refroidissement.
